# EUROPEAN PATENT SPECIFICATION

(11) **EP 3 051 832 B1**
(45) Date of publication and mention of the grant of the patent: **18.09.2019**
(21) Application number: 15153274.4
(22) Date of filing: 30.01.2015
(51) Int. Cl.: H04Q 9/00, E04C 2/292, G05D 22/00, G01N 27/00

(54) **Condition monitoring of building element or building structure**
Zustandsüberwachung von Bauelementen oder Gebäudestrukturen
Surveillance de l'état d'un élément de construction ou de structure de bâtiment

(43) Date of publication of application: 03.08.2016
(73) Proprietor: Rautaruukki Oyj, 00810 Helsinki (FI)
(72) Inventor: Honkakoski, Erkki, 00810 Helsinki (FI)
(74) Representative: Boco IP Oy Ab

(56) References cited:
- EP-A1- 0 709 814
- US-A1- 2005 179 578

## Description

### FIELD OF THE INVENTION

The invention relates generally to improving quality of buildings. More specifically the invention relates to condition monitoring of a building element or a building structure.

### BACKGROUND

Monitoring condition of buildings, like moisture level, during building phase and after that has become more important nowadays. Conventionally many buildings are made of building elements like prefabricated concrete elements or sandwich panels, which are used in warehouses, public buildings, business premises, agricultural buildings, industrial buildings, facades, partition walls and ceilings. Building elements may get additional moisture during careless transportation from a factory to a building site, during temporary storage on the building site or during building assembly process in bad weather conditions. Also building errors and mechanical accidents may cause moisture to enter inside the building elements. Moisture may be difficult to detect with an external inspection device located outside of the building element. Retrofitting structure-braking monitoring systems afterwards into the building element is costly and usually has a negative visual impact on the building.

Publication EP 0 709 814 A1 discloses an arrangement, in which the moisture content of a construction material is measured using a measuring instrument that is embedded in the construction material.

### BRIEF DESCRIPTION OF THE INVENTION

According to an aspect, there is provided the subject matter of the independent claims. Embodiments are defined in the dependent claims.

One or more examples of implementations are set forth in more detail in the accompanying drawings and the description below. Other features will be apparent from the description and drawings, and from the claims.

### LIST OF THE DRAWINGS

In the following, some aspects of the invention will be described in greater detail with reference to embodiments and the accompanying drawings, in which
Figure 1 presents a building structure, according to an embodiment;
Figure 2 presents a building element, according to an embodiment;
Figure 3 presents a building element, according to an embodiment;
Figure 4 presents a building structure, according to an embodiment;
Figure 5 illustrates an example of a method for monitoring condition of a building element;
Figure 6 illustrates an example of a method for monitoring condition of a building structure; and
Figure 7 shows an apparatus, according to an embodiment.

### DESCRIPTION OF EMBODIMENTS

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

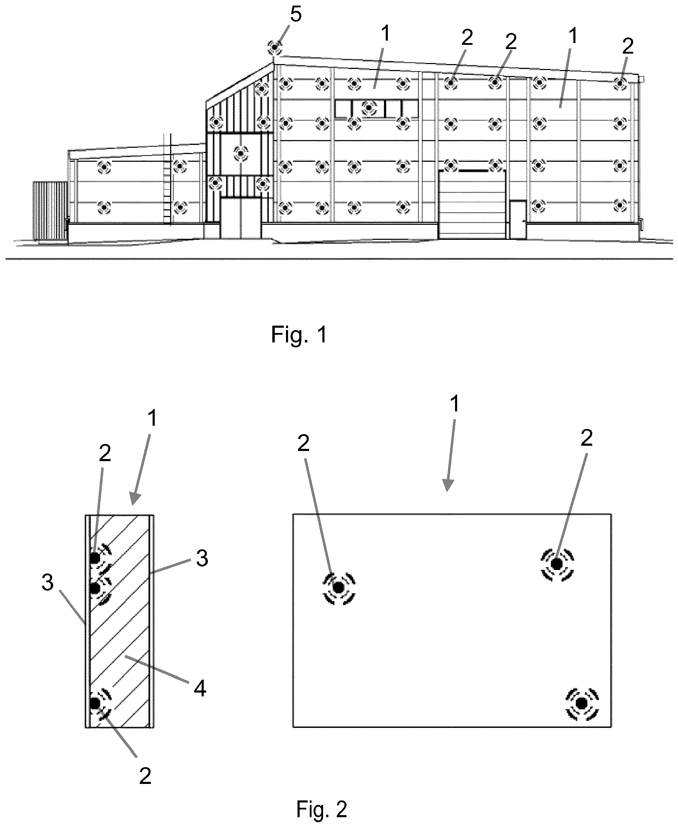

Figure 1 illustrates a non-limiting example of a building to which embodiments of the invention may be applied. As shown in Figure 1 walls of the building may comprise prefabricated building elements 1, such as prefabricated concrete elements or sandwich panels. The building elements may comprise at least one internal node 2 capable of wireless radio communication with each other and/or outside of the building element. At least one internal node may be capable of generating communications signal outside of the building element to at least one other internal node of another building element or to external node 5 outside of the building element and the building structure. At least one internal node may be capable of transmitting and receiving signals, being a transceiver.

The internal nodes may be buried in concrete when the concrete element is cast or they may be integrated in the sandwich panel at the manufacturing stage. The internal node integration at pre-fabrication stage is fast and simple because there is no need for internal or external cabling. The internal nodes may be freely located inside the building element. Location of the internal nodes can be tailored to suit the purpose and optimize the cost. In an embodiment the internal node network may be denser around building envelope where there may be more seams or forms that are more stressed from the building elements. The internal node network may be less dense in the areas where may be smaller risk for envelope leaks. In an embodiment the internal nodes are located inside the building element so that they are far enough from each other to measure efficiently moisture of the whole building element. To protect the internal nodes inside the building element they may be located far enough from corners and sides. The corners and sides of the building element may be damaged during transportation and installation. In an embodiment nodes are located inside the building elements so that they form uniformly and evenly distributed network inside the building structure. In an embodiment there may only be one node inside each building element. In that situation one node of each building element may be located in the middle of the building element to make the communication network uniformly distributed. As shown in figure 1 some of the building elements of the building structure may not have any internal nodes. This may be possible if internal nodes of the other building elements may send their signal through those elements and may measure moisture of those elements also. The nodes are permanently embedded in the building elements and they are not visually detectable and do not affect overall properties of the building element.

Figure 2 illustrates a non-limiting example of a building element 1 to which embodiments of the invention may be applied. Figure 2 shows a side view and a front view of the building element 1 which is a sandwich panel. Sandwich panels have two outer surfaces 3 and an insulation material 4, such as mineral wool, polyurethane, polyisocyanurate or polystyrene between the surfaces 3. The surfaces may be made of materials having low permeability of radio waves like metal sheets, such as steel or aluminium. The surfaces may also be made of materials having high permeability of radio waves, such as plastic, fibre composite, concrete or wood. Both of the surfaces may be made of same of different material. One of the surfaces may be a surface having low permeability of radio waves and the other may be a surface having high permeability of radio waves. Also part of the surface having low permeability of radio waves may comprise at least one part, which part has high permeability of radio waves. This means that there may be at least one area having high permeability of radio waves in the surface having low permeability of radio waves. The sandwich panel comprise also three internal nodes 2 capable of wireless radio communication with each other. At least one internal node may be capable of generating communications signal outside of the sandwich panel. In an embodiment at least one internal node may be capable of generating communications signal outside of the sandwich panel to another internal node located in another sandwich panel. In an embodiment the sandwich panel may comprise at least two internal nodes capable of wireless radio communication only with each other, thus they may not be capable to generate communications signal outside of the sandwich panel. In an embodiment some internal nodes may be less intelligent that the others. Some internal nodes may be able to transmit or receive only and some may be transceivers. In an embodiment one internal node may transmit only inside the sandwich panel and the other may transmit outside the sandwich panel. Some of the internal nodes may be more intelligent than the others making the less intelligent internal nodes cheaper and less complicated.

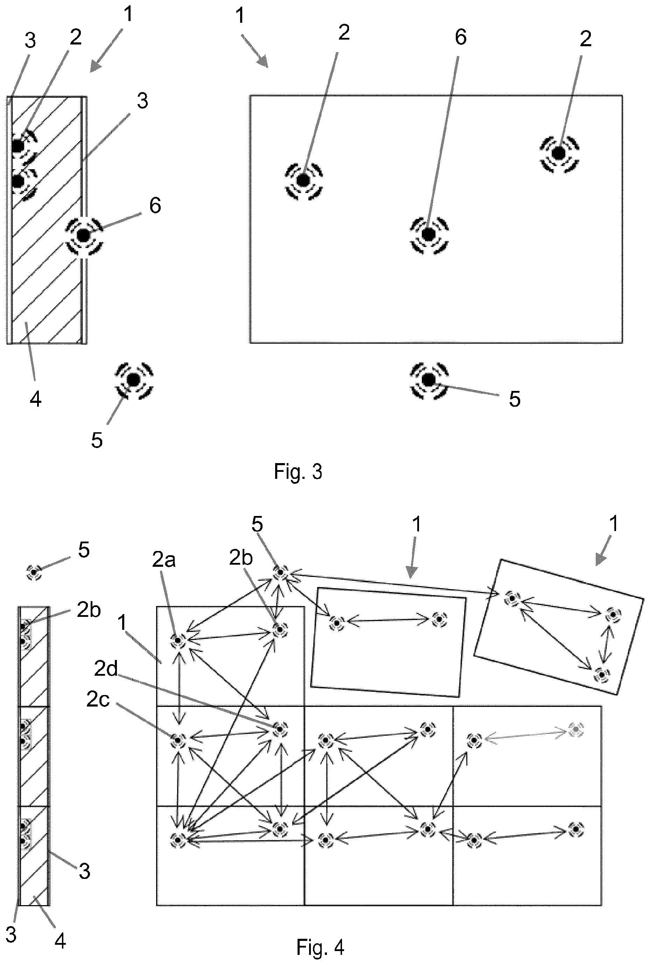

Figure 3 illustrates another non-limiting example of a building element 1 to which embodiments of the invention may be applied. Figure 3 shows a side view and a front view of the building element which is a sandwich panel. The sandwich panel may be the same kind of panel as in figure 2 having two outer surfaces 3 and an insulation material 4 between the outer surfaces 3. The sandwich panel comprises two internal nodes 2 capable of wireless radio communication and at least one internal node may be capable of generating communications signal outside of the sandwich panel. In an embodiment at least one internal node may be capable of generating communications signal outside of the sandwich panel to another internal node located in another sandwich panel or to an external node 5 located out of the sandwich panel. At least one of the surfaces is made of material having low permeability of radio waves comprising a repeater 6. The repeater is needed because radio signals, sent by the internal nodes, do not penetrate the surface having low permeability of radio waves. Thus the repeater forwards or mediates the signal outside of the sandwich panel. In an embodiment the internal node may also be the repeater. In figure 3 the external node 5 is located outside of the sandwich panel and at outside of the side of the sandwich panel comprising surface having low permeability of radio waves, said side comprising also the repeater. In an embodiment the repeater is capable of receiving communications signal from at least one internal node and communicating it outside of the sandwich panel. In an embodiment the repeater is capable of communicating communications signal outside to at least one external node. The external node may be connected to local area networks, telephone networks or internet to transfer the information further.

Figure 4 illustrates a non-limiting example of a building structure to which embodiments of the invention may be applied. Figure 4 shows side view and front view of the building structure comprising building elements 1 which may be sandwich panels according to figure 2 or 3. The building elements may be installed side by side covering the whole building structure, such as a wall or a building or any other kind of construction. The building elements may often be installed so that one surface of the building element is outside the building and other is inside the building. The building elements comprise at least one internal node 2 capable of wireless radio communication. The at least one internal node may be capable of generating communications signal outside of the building element to another internal node located in another building element or to an external node 5 located outside of the building element. In an embodiment the building element may comprise at least two internal nodes capable of wireless radio communication with each other and with at least one internal node located inside the other building elements. The building elements are connectable to form a single uniform structure and the internal nodes of the connected building elements are capable of forming a wireless multi-hop radio network for communications of radio signals between the building elements. In an embodiment at least one building element may communicate condition information outside of the building structure. The condition information may be communicated to the external node 5. In an embodiment an internal node may comprise at least one processor and at least one memory including a computer program code, wherein the internal node is located inside a building element and capable of wireless radio communications with at least one other internal node located inside the same or a different building element and capable of wireless radio communications, wherein at least one internal node is capable of generating communications signal receivable inside or outside of the building element, wherein the at least one memory and the computer program code are configured with the processor to cause the internal node to determine condition information of the building element based on at least one signal sent between the internal nodes.

In figure 4 the building structure comprises building elements 1. The building elements comprise internal nodes 2. In an embodiment some of the internal nodes may be capable to communicate only with each other and some of the internal nodes may be capable to communicate with each other and also outside of the building element. In figure 4 an internal node 2a may communicate with another internal node 2b located inside the same building element and with other internal nodes 2c, 2d located inside another building element. Not all of the internal nodes are capable of communicating outside of the building element to the external node 5 but all of the internal nodes of the building structure are capable of communicating with each other. The internal node 2a may communicate outside of the building structure to the external node 5.

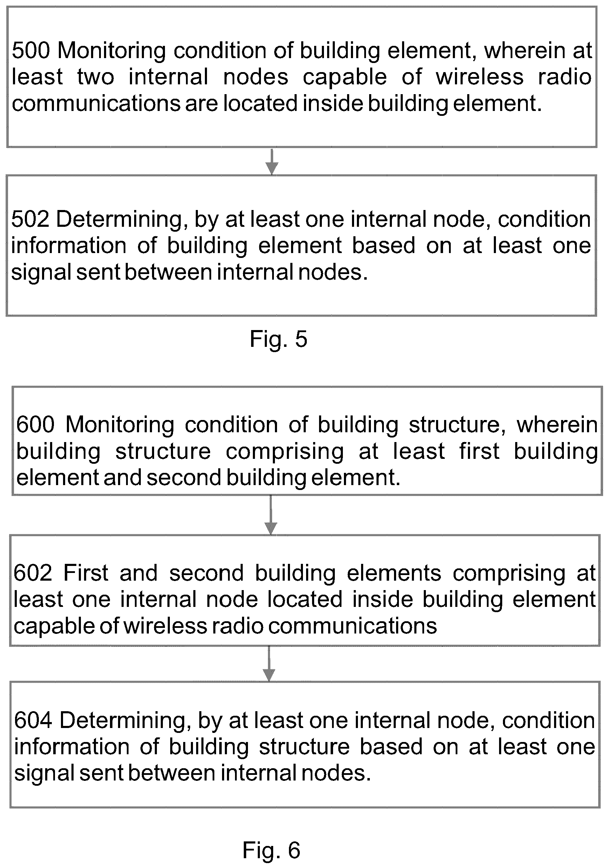

Figure 5 describes an example of a method for monitoring condition of a building element. The method may be carried in a building element, such as a building element 1. In the following, the method is explained by using the exemplifying construction according to figures 1 to 4. The construction is used for the sake of clarity and it should not be taken as limiting the implementation of the method by any means.

Condition of a building element may be monitored by internal nodes, wherein at least two internal nodes capable of wireless radio communications are located inside the building element (500). At least one internal node may determine condition information of the building element based on at least one signal sent between the internal nodes (502). In an embodiment at least one internal node may be capable of generating communications signal receivable outside of the building structure and communicating the condition information outside of the building structure. The building element may comprise at least two internal nodes wherein only one of the internal nodes may be able to communicate outside of the building element and another node may not be able to communicate outside of the building element and thus may be less complicated. Possibility to have internal nodes with less functionality may make the building element cheaper and less complicated and may also save energy of the internal nodes.

In an embodiment said condition information may comprise moisture information, temperature information, vibration values, sound information of the building element, doors and windows position information for access control or antitheft alarm system. The condition information may comprise change of condition stage instead of particular value, for example moisture exists or not instead of moisture value, power lever or time period. In an embodiment at least one determined condition information may be stored in the memory of the internal node. In an embodiment at least one determined condition information may be stored as calibrated condition information in the memory of the internal node. In an embodiment the internal node may determine condition of the building element by comparing the earlier saved calibrated condition information with determined new condition information. This means that when the internal node determines new condition information it may be compared with the earlier saved condition information.

In an embodiment the condition information is communicated outside of the building element to a person who is able to detect the condition of the building from the received light or sound information. In an embodiment the condition information is communicated to at least one external node located outside of the building element. In an embodiment the external node may be a node comprising at least one processor, at least one communications interface, at least one user interface and at least one memory including a computer program code. The at least one memory and the computer program code may be configured to save the received condition information in the memory of the external node and process it further. In an embodiment the determined condition information from the internal node may be stored as calibrated condition information in the memory of the external node. The external node may determine condition of the building element by comparing the earlier saved calibrated condition information with received new condition information. In an embodiment the external node is a repeater forwarding the condition information further. In an embodiment the external node may forward the received condition information further to at least one external node or other networks like local area access network (LAN), Internet or cloud services. In an embodiment the external node may be a portable inspection device collecting received condition information and saving it in the memory of the device.

A sandwich panel condition monitoring can be made by monitoring wireless transmission and receiving. It is well known that transmission of radio frequency is closely dependent on dielectric properties of materials and the environment. In vacuum a wave travels at the speed of light and in the air the wave travels almost as fast as in vacuum. In a uniform material permeability is constant, thus variation of signal velocity will be highly dependent on variation of the dielectric constant and less dependent on temperatures of the building structure. Transmission conditions inside a building element are relatively stable with dimensions, temperatures and materials. However if moisture and free water content of the building element changes the overall dielectric constant of the material also changes and this can be detected from an internal node transmissions as a change in a power level or a transmission time. Sandwich panels comprising surfaces having low permeability of radio waves may have positive effect on power transmission inside an insulation material by further reflecting and keeping transmission energy inside the insulation material.

In an embodiment condition information may be determined on the basis of a power level of the received radio signal from at least one internal node. In an embodiment a first node located inside of the building element may send wireless radio signal to a second node located inside of the same building element or to a different building element located outside of the different building element The second node may measure power level of the received signal and save power level value in a memory of the second node or it may be transmitted further outside of the building element. The first measurement value of a power level of a building element may be stored as a calibrated power level value. Later measurements may be compared against this calibrated condition level value. If later measured power level values differs from the calibrated power level value there may be moisture in the building element. The measured power level may be higher or lower depending on whether direct wave or reflection is measured or whether the surface is dry or wet. Also the power level may depend on the surface material of the sandwich element, like surfaces having low permeability of radio waves may change the power level also measuring methods.

In an embodiment the first measurement of a power level of a building element may be made in a prefabrication stage or in a packing stage in a factory after the building element is prepared and it is ready to be transmitted to a building site. The measured power level value may be stored as calibrated power level value in the memory of the internal node or it may be transmitted further outside of the building element to the external node and stored in the memory of the external node. Later measurements may be compared against the calibrated power level value to detect possible moisture changes during transportation, during storage at the building site and building phase and during use of the building.

In an embodiment condition information may be determined on the basis of a time period between a sent radio signal to an internal node and response to the sent radio signal. In an embodiment a first node located inside of the building element may send wireless radio signal to a second node located inside of the same building element or to a second node located inside of a different building element. When the first node sends the signal it may start a timer. The second node may receive the signal and may send a response to the received signal. After receiving the response the first node may stop the timer. The timer may determine the needed time period to receive response to the sent signal. The first node may save the time period in a memory of the first node or the time period may be transmitted further outside of the building element. The first measurement value of the time period may be stored as a calibrated time period. Later measurements may be compared against this calibrated time period. If later measured time period differs from the calibrated time period there may be moisture in the building element. The time period may increase if dielectricity grows which means that if the latest measured time period is longer than the calibrated time period there may be moisture in the building element. In an embodiment at least one internal node is configured to determine the condition information on the basis of a power level of the received radio signal from at least one internal node and on the basis of a time period between a sent radio signal to an internal node and response to the sent radio signal. Thus to determination of the condition information may be done using both power lever and time period which will make the condition information determination more accurate.

Determining moisture of the building element by using a power level or a time period determination is effective because moisture can be determined between the internal nodes and using only two internal nodes. Determining moisture of the building element in different points by using moisture sensors inside the building element is difficult because a lot of sensors are needed inside the building element and they still measure moisture only in one particular point. Detecting conditions between the nodes may give better view of the moisture with less internal nodes and with less measuring channels compared to situation where measuring is done in one or few points with moisture sensors and extrapolating what might be the condition between the measurement points. Generating moisture information between the internal nodes may make building envelope leakage detection faster with less instruments and lower energy use. Between the internal nodes may be building element seams and/or other discontinuity in a building material which are more vulnerable for building errors. Condition measurement can be made without penetrating the building element or seams with measurement devices, like electronics, cables or sensors which may disturb building material properties on that point. A sensor or a sensor cable installed in a core material may itself support water penetration deeply into the building material if there is a difference with building material surface energy and added measurement device material.

In an embodiment the building element is a sandwich panel having at least one surface having low permeability of radio waves and at least one surface having high permeability of radio waves. In an embodiment the sandwich panel may comprise metal as a surface having low permeability of radio waves and for example fiberboard as a surface having high permeability of radio waves. The internal node may determine condition information, such as moisture of the building element by determining a power level value or a time period value. The internal node may calculate moisture of the building element comparing earlier saved calibrated value to the determined value and may save the value and condition information like a moisture level or moisture condition, such as yes or no, in a memory of the internal node. The internal node may communicate the condition information further outside of the sandwich panel to a side of the sandwich panel having the surface having high permeability of radio waves. The condition information may be communicated to at least one external node located outside of the building element. In an embodiment the internal node may determine condition information comprising a power level value or a time period value and may communicate the condition information further outside of the sandwich panel to a side of the sandwich panel comprising the surface having high permeability of radio waves. The condition information may be communicated to at least one external node located outside of the building element. The external node may save the condition information comprising a power level value or a time period value and may calculate moisture of the building element comparing an earlier saved calibrated value to a determined value and may save the result in a memory of the external node.

In an embodiment the building element is a sandwich panel having at least one surface having low permeability of radio waves. In an embodiment the sandwich panel may comprise a surface having low permeability of radio waves, such as metal, in both surfaces. The internal node may determine condition information of the building element based on at least one signal sent between the internal nodes. The internal node may communicate the condition information further outside of the sandwich panel to a side of the sandwich panel having the surface having low permeability of radio waves. Because the surfaces having low permeability of radio waves do not penetrate radio waves, at least one surface having low permeability of radio waves may comprise at least one repeater capable of communicating with at least one of the internal nodes and outside of the sandwich panel. In an embodiment the repeater may communicate the condition information to at least one external node located outside of the building element. In an embodiment the repeater may communicate the condition information to a person located outside of the building element.

In an embodiment the repeater may be a passive repeater comprising at least one hole in the low radio waves permeable surface or at least one part of the low radio waves permeable surface, said part having low permeability of radio waves. If the repeater is a hole in the surface of a sandwich panel, radio waves may freely penetrate the surface through the holes. In an embodiment the surface may comprise at least one part made of material having high permeability of radio waves, like plastic allowing penetration of radio waves. In an embodiment the repeater may be an active repeater. The active repeater may receive radio signal from the internal node and amplify the received radio signal outside of the sandwich panel. The received signal may be communicated to at least one external node located outside of the sandwich element. In an embodiment the active repeater may receive radio signal from the internal node and generate on basis of the received radio signal an ultrasound, infrasound or light outside of the sandwich panel. In an embodiment generated ultrasound, infrasound or light may be communicated to at least one external node or a person located outside of the sandwich element. In an embodiment when detecting moisture in the sandwich element the internal node may send condition information to the active repeater. The active repeater may transfer condition information to ultrasound, infrasound or light which may be detected outside of the sandwich element. Person standing outside of the sandwich element may hear alarm signal and/or see alarm light.

Figure 6 describes an example of a method for monitoring condition of a building structure. The method is explained by using the exemplifying construction according to figures 1 and 4.

Condition of a building structure may be monitored by internal nodes, wherein the building structure may comprise at least a first building element and a second building element (600). The first and the second building elements may comprise at least one internal node located inside the building element capable of wireless radio communications (602). At least one internal node may determine condition information of the building structure based on at least one signal sent between the internal nodes (604). In an embodiment the building elements may be connectable to form a single uniform structure, wherein the internal nodes of the building elements may form a wireless multi-hop radio network for communications of radio signals between the building elements. In an embodiment at least one internal node may be capable of generating communications signal receivable outside of the building structure and wherein communicating the condition information outside of the building structure. In an embodiment the building elements may communicate the condition information outside of the building structure to an external node or a person.

In an embodiment a building structure may be made by installing building elements side by side covering the whole building structure. The building elements may comprise at least one internal node 2 capable of wireless radio communication. At least one internal node may be capable of generating communications signal outside of the building element to another internal node located in inside the same or a different building element. In an embodiment at least one building element may comprise at least two internal nodes capable of wireless radio communication only with each other. The building elements are connectable to form a single uniform structure and the internal nodes of the connected building elements are capable of forming a wireless multi-hop radio network for communications of radio signals between the building elements and at least one building element may communicate condition information outside of the building structure. Measurement between the different building elements and multiple measuring paths is possible with help of multi-hop protocols. A new calibration value between different internal nodes may be made after construction may have been finished and these values may be saved to be able to compare condition information changes in whole construction during warranty time and long term use. Knowing the building element placements in the building and identification of each internal node there may be a good coverage of condition monitoring throughout the whole building structure. Detecting conditions between the internal nodes in different building elements give better overall view of building condition than when measuring moisture in one or few points which is a problem with sensor measurements.

In an embodiment special internal nodes comprising sensors and/or actuators may be easy to add production phase of a building element to form an active sensored information network. In an embodiment adding a moisture sensor to an internal node may function as a reference and may be a valuable asset to compare against determined condition information. In an embodiment two temperature sensors may be added to the internal nodes located close to both of outer surfaces of a sandwich panel to measure temperature difference and to calculate sandwich panel insulation properties and monitor it over time. Measuring temperature close to metal surfaces of the sandwich panel may make the early detection of abnormal temperature changes inside or outside of the building possible. This may be used to monitor cold storages, in early fire detection or even use as a reference with building heating or cooling systems. In an embodiment a vibration sensor may be added to the internal node to detect vibration of a structure, noise level, or structural sound or changes to doors or windows positions. Further for long term monitoring may be easy to add external nodes in building which provide gathered information flow to other networks like LAN and Internet and Cloud services. In the finished buildings may be several post-assembled systems and sensing needs like temperature and air quality measurement needs, sensing open and closed doors and windows in a building.

A building structure may be robust against many internal node failures because it may have several alternative routes for information transfer. The internal nodes and their power level are frequently monitored and information about environment is known. With dense network of the internal nodes and with alternative information routes it may be possible to analyze and predict if a fault state, such as a lost sensor, may be a reason for the change in the environment or as the internal node itself may have lost its capability to operate. With dense network of internal nodes and alternative information routes it may be possible to analyze if a lost or poorly operating internal node is faulty or a victim of moisture condition change. By comparing other transmission paths close to this internal node location it may be relatively easy to make these conclusions and assumptions.

Total energy usage of the internal nodes for transmission, receiving and needed frequency of transmissions can be tailored to suit the needs. In an embodiment low power IC technology may provide wireless operation for years. Also different energy harvesting methods may be used like energy harvesting based on temperature difference of outer surfaces of the sandwich panels according to publication WO 2010029217.

The frequency or frequency range which may suit best for the transmission inside the building element may be between ultra-high frequencies (UHF) or super high frequency (SHF) and microwave, such as 3GHz wave having 10cm wave length. UWF Ultra wide frequency transmission (UWF) may also work but frequencies that are much lower than 500MHz may not be useful. In an embodiment the best wave length is closer to 1cm to 1mm with more absorption with water molecules. Free water, ice and humidity may act differently and may be possible to detect.

Accurate placements detection of nodes for operation and for charging purposes in sandwich panel may not be needed. The placement of nodes inside the building element may be made on manufacturing site. There may still be a need to locate the internal nodes afterwards. In an embodiment it may be done with a small permanent magnet placed to the internal node. Static magnetic field may be sensed through a thin metal skin of the sandwich panel.

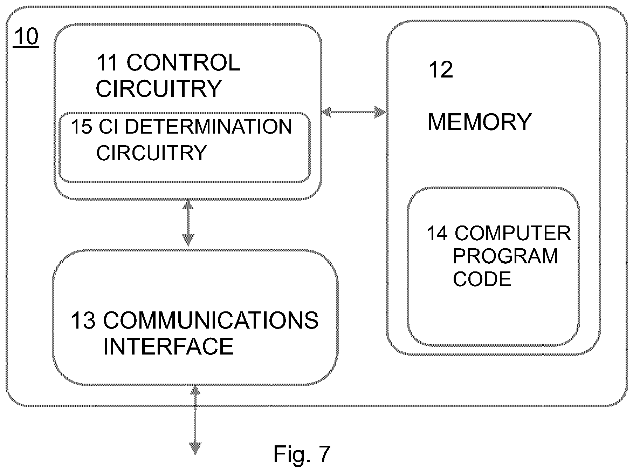

Figure 7 provide an apparatus 10 comprising a control circuitry 11, such as at least one processor and at least one memory 12 including a computer program code, wherein the apparatus is located inside a building element and capable of wireless radio communications with at least one other apparatus located inside the same or a different building element and capable of wireless radio communications, wherein at least one apparatus is capable of generating communications signal receivable inside or outside of the building element, wherein the at least one memory and the computer program code are configured with the processor to cause the apparatus to carry out any one of the embodiments of figures 1 to 6, or operations thereof. In an embodiment these operations may comprise tasks, such as, determine condition information of the building element based on at least one signal sent between the internal nodes.

The memory 12 may be implemented using any suitable data storage technology, such as semiconductor based memory devices, flash memory, magnetic memory devices and systems, optical memory devices and systems, fixed memory and removable memory.

The apparatus 10 may further comprise at least one communication interface 13, comprising hardware and/or software for realizing communication connectivity according to one or more communication protocols. The communication interfaces may provide the internal node with communication capabilities to access the wireless radio network, for example. In an embodiment the apparatus may further comprise condition information (CI) determination circuitry 15 for determining condition information from at least one sent signal between internal nodes. In an embodiment condition information is determined on the basis of a power level of the received radio signal from at least one internal node, and/or on the basis of a time period between a sent radio signal to an internal node and response to the sent radio signal. In an embodiment circuitry determines condition information by comparing power lever or time period with the earlier saved power lever or time period.

In an embodiment, the apparatus 10 may be or be comprised in an internal node.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

In an embodiment, at least some of the processes described in connection with figures 1 to 6 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, circuit, and circuitry. In an embodiment these operations may comprise tasks, such as, determine condition information of the building element based on at least one signal sent between the internal nodes.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g. procedures, functions, and so on) that perform the functions described herein. The software codes or code portions may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out in the form of a computer process defined by a computer program or portions thereof. Embodiments of the methods described in connection with figures 1 to 6 may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. A building element (1) such as a prefabricated concrete element or a sandwich element, **characterized by** comprising at least two internal nodes (2; 2a, 2b; 2c, 2d; 10) located inside the building element (1) and capable of wireless radio communications, wherein at least one internal node (2; 2a, 2b; 2c, 2d; 10) is configured to determine condition information such as moisture and/or temperature information of the building element (1) based on monitoring of change in power level and/or transmission time of at least one signal sent between the internal nodes (2; 2a, 2b; 2c, 2d; 10).

2. A building structure, comprising at least two building elements (1) according to claim 1, **characterized in that**
wherein at least one internal node (2; 2a, 2b; 2c, 2d; 10) of one of said at least two building elements (1) is configured to determine condition information of the building structure based on monitoring of change in power level and/or transmission time of at least one signal sent between an internal node (2; 2a, 2b; 2c, 2d; 10) in one of said at least two building elements (1) and an internal node (2; 2a, 2b; 2c, 2d; 10) in another of said at least two building elements (1).

3. The building structure of claim 2, wherein said at least two building elements (1) are connectable to form a single uniform structure and the internal nodes (2; 2a, 2b; 2c, 2d; 10) of said at least two connected building elements (1) are capable of forming a wireless multi-hop radio network for communications of radio signals between the building elements (1).

4. The building element (1) of claim 1 or the building structure of any of claims 2 to 3, wherein at least one internal node (2; 2a, 2b; 2c, 2d; 10) is capable of generating communications signal receivable outside of the building element (1) and wherein at least one internal node (2; 2a, 2b; 2c, 2d; 10) is configured to generate the condition information sendable outside of the building element (1).

5. The building element (1) of claim 4 or the building structure of claim 4, wherein the generated condition information is sendable outside of the building element (1) to an external node (5).

6. The building element (1) of any of claims 1, 4 to 5 or the building structure of any of claims 2 to 5, wherein at least one internal node (2; 2a, 2b; 2c, 2d; 10) is configured to determine the condition information on the basis of a power level of the received radio signal from at least one internal node (2; 2a, 2b; 2c, 2d; 10), and/or on the basis of a time period between a sent radio signal to an internal node (2; 2a, 2b; 2c, 2d; 10) and response to the sent radio signal.

7. The building element (1) of any of claims 1, 4 to 6 or the building structure of any of claims 2 to 6, wherein at least one determined condition information is storeable in a memory (12) of the internal node (2; 2a, 2b; 2c, 2d; 10) or the external node (5).

8. The building element (1) of any of claims 1, 4 to 7 or the building structure of any of claims 2 to 7, wherein the building element (1) is a sandwich panel comprising at least one surface (3) having low permeability of radio waves and at least one surface (3) having high permeability of radio waves, and wherein at least one internal (2; 2a, 2b; 2c, 2d; 10) node is configured to communicate the condition information to a side of the sandwich panel comprising the surface (3) having high permeability of radio waves.

9. The building element (1) of any of claims 1, 4 to 8 or the building structure of any of claims 2 to 8, wherein the building element (1) is a sandwich panel comprising at least one surface (3) having low permeability of radio waves, wherein at least one internal node (2; 2a, 2b; 2c, 2d; 10) is configured to communicate the condition information to a side of the sandwich panel comprising the surface (3) having low permeability of radio waves, wherein the surface (3) having low permeability of radio waves comprising at least one repeater (6) configured to communicate with at least one of the internal nodes (2; 2a, 2b; 2c, 2d; 10) and outside of the sandwich panel.

10. An internal node (10), **characterized by** comprising:
at least one processor (11) and at least one memory (12) including a computer program code (14), wherein the internal node (10) is located inside a building element (1), such as a prefabricated concrete element or a sandwich element, and capable of wireless radio communications with at least one other internal node (2; 2a, 2b; 2c, 2d; 10) located inside the same or a different building element (1) and capable of wireless radio communications, wherein at least one internal node (2; 2a, 2b; 2c, 2d; 10) is capable of generating communications signal receivable inside or outside of the building element (1), wherein the at least one memory (12) and the computer program code (14) are configured with the processor (11) to cause the internal node (2; 2a, 2b; 2c, 2d; 10) to
determine condition information, such as moisture and/or temperature information, of the building element (1) based on monitoring the change of power level and/or transmission time of at least one signal sent between the internal nodes (2; 2a, 2b; 2c, 2d; 10).

11. A method for monitoring (500) condition of a building element (1), such as a prefabricated concrete element or a sandwich element, **characterized in that** at least two internal nodes (2; 2a, 2b; 2c, 2d; 10) capable of wireless radio communications are located inside the building element (1), the method comprising:
determining (502), by at least one internal node (2; 2a, 2b; 2c, 2d; 10), condition information, such as moisture and/or temperature information, of the building element based on monitoring the change of power level and/or transmission time of at least one signal sent between the internal nodes (2; 2a, 2b; 2c, 2d; 10).

12. The method of claim 11, wherein the condition information is determined (502) on the basis of a power level of the received radio signal from at least one internal node (2; 2a, 2b; 2c, 2d; 10) and/or on the basis of a time period between a sent radio signal to an internal node (2; 2a, 2b; 2c, 2d; 10) and response to the sent radio signal.

13. A method for monitoring (600) condition of a building structure, **characterized by** the building structure comprising at least a first building element (1), such as a prefabricated concrete element or a sandwich element, and a second building element (1), such as a prefabricated concrete element or a sandwich element,
wherein each of the first and the second building elements (1) comprising (602) at least one internal node (2; 2a, 2b; 2c, 2d; 10) located inside the first and the second building element (1) capable of wireless radio communications; and the method comprising:
determining (604), by at least one internal node (2; 2a, 2b; 2c, 2d; 10), condition information, such as moisture and/or temperature information, of the building structure based on monitoring the change of power level and/or transmission time of at least one signal sent between the internal nodes (2; 2a, 2b; 2c, 2d; 10).

14. The method of claim 13, wherein the building elements (1) are connectable to form a single uniform structure and the method comprising:
forming, by the internal nodes (2; 2a, 2b; 2c, 2d; 10) of the building elements (1), a wireless multi-hop radio network for communications of radio signals between the building elements (1).

15. The method of any of claim 13, wherein at least one internal node (2; 2a, 2b; 2c, 2d; 10) is capable of generating communications signal receivable outside of the building structure and communicating the condition information outside of the building structure.

## Patentansprüche

1. Bauelement (1) wie z. B. ein vorgefertigtes Betonelement oder ein Sandwichelement, **gekennzeichnet durch** das Umfassen von mindestens zwei internen Knoten (2; 2a, 2b; 2c, 2d; 10), die sich innerhalb des Bauelementes (1) befinden und zur drahtlosen Funkkommunikation fähig sind, wobei mindestens ein interner Knoten (2; 2a, 2b; 2c, 2d; 10) konfiguriert ist, um eine Zustandsinformation wie z. B. eine Feuchtigkeits- und/oder Temperaturinformation des Bauelementes (1) zu bestimmen, und zwar basierend auf der Überwachung einer Änderung des Leistungspegels und/oder der Übertragungszeit von mindestens einem Signal, das zwischen den internen Knoten (2; 2a, 2b; 2c, 2d; 10) gesendet wird.

2. Gebäudestruktur, die mindestens zwei Bauelemente (1) nach Anspruch 1 umfasst, **dadurch gekennzeichnet, dass**
mindestens ein interner Knoten (2; 2a, 2b; 2c, 2d; 10) von einem der mindestens zwei Bauelemente (1) konfiguriert ist, um eine Zustandsinformation der Gebäudestruktur zu bestimmen, und zwar basierend auf der Überwachung einer Änderung des Leistungspegels und/oder der Übertragungszeit von mindestens einem Signal, das zwischen einem internen Knoten (2; 2a, 2b; 2c, 2d; 10) in einem der mindestens zwei Bauelemente (1) und einem internen Knoten (2; 2a, 2b; 2c, 2d; 10) in dem anderen der mindestens zwei Bauelemente (1) gesendet wird.

3. Gebäudestruktur nach Anspruch 2, wobei die mindestens zwei Bauelemente (1) sich vernetzen lassen, um eine einzelne gleichmäßige Struktur zu bilden und die internen Knoten (2; 2a, 2b; 2c, 2d; 10) der mindestens zwei vernetzten Bauelemente (1) fähig sind, ein drahtloses Multi-Hop-Funknetz für die Kommunikation von Funksignalen zwischen den Bauelementen (1) zu bilden.

4. Bauelement (1) nach Anspruch 1 oder Gebäudestruktur von einem der Ansprüche 2 bis 3, wobei mindestens ein interner Knoten (2; 2a, 2b; 2c, 2d; 10) fähig ist, ein Kommunikationssignal zu erzeugen, das sich außerhalb des Bauelementes (1) empfangen lässt und wobei mindestens ein interner Knoten (2; 2a, 2b; 2c, 2d; 10) konfiguriert ist, um die Zustandsinformation zu erzeugen, die sich außerhalb des Bauelementes (1) senden lässt.

5. Bauelement (1) nach Anspruch 4 oder Gebäudestruktur nach Anspruch 4, wobei sich die erzeugte Zustandsinformation außerhalb des Bauelementes (1) an einen externen Knoten (5) senden lässt.

6. Bauelement (1) nach einem der Ansprüche 1, 4 bis 5 oder Gebäudestruktur nach einem der Ansprüche 2 bis 5, wobei mindestens ein interner Knoten (2; 2a, 2b; 2c, 2d; 10) konfiguriert ist, um die Zustandsinformation zu bestimmen, und zwar auf der Basis eines Leistungspegels des empfangenen Funksignals von mindestens einem internen Knoten (2; 2a, 2b; 2c, 2d; 10) und/oder auf der Basis eines Zeitraums zwischen einem, an einen internen Knoten (2; 2a, 2b; 2c, 2d; 10), gesendeten Funksignal und der Antwort auf das gesendete Funksignal.

7. Bauelement (1) nach einem der Ansprüche 1, 4 bis 6 oder Gebäudestruktur nach einem der Ansprüche 2 bis 6, wobei sich mindestens eine bestimmte Zustandsinformation in einem Speicher (12) des internen Knotens (2; 2a, 2b; 2c, 2d; 10) oder des externen Knotens (5) speichern lässt.

8. Bauelement (1) nach einem der Ansprüche 1, 4 bis 7 oder Gebäudestruktur nach einem der Ansprüche 2 bis 7, wobei das Bauelement (1) eine Sandwichplatte ist, die mindestens eine Fläche (3), die eine niedrige Permeabilität für Funkwellen aufweist und mindestens eine Fläche (3), die eine hohe Permeabilität für Funkwellen aufweist, umfasst und wobei mindestens ein interner Knoten (2; 2a, 2b; 2c, 2d; 10) konfiguriert ist, um die Zustandsinformation an eine Seite der Sandwichplatte zu kommunizieren, die die Fläche (3) umfasst, die eine hohe Permeabilität für Funkwellen aufweist.

9. Bauelement (1) nach einem der Ansprüche 1, 4 bis 8 oder Gebäudestruktur nach einem der Ansprüche 2 bis 8, wobei das Bauelement (1) eine Sandwichplatte ist, die mindestens eine Fläche (3) umfasst, die eine niedrige Permeabilität für Funkwellen aufweist, wobei mindestens ein interner Knoten (2; 2a, 2b; 2c, 2d; 10) konfiguriert ist, um die Zustandsinformation an eine Seite der Sandwichplatte zu kommunizieren, die die Fläche (3) umfasst, die eine niedrige Permeabilität für Funkwellen aufweist, wobei die Fläche (3), die eine niedrige Permeabilität für Funkwellen aufweist, mindestens einen Repeater (6) umfasst, der konfiguriert ist, um mit mindestens einem der internen Knoten (2; 2a, 2b; 2c, 2d; 10) und außerhalb der Sandwichplatte zu kommunizieren.

10. Interner Knoten (10), **gekennzeichnet durch** das Umfassen von:
mindestens einem Prozessor (11) und mindestens einem Speicher (12), umfassend einen Computerprogrammcode (14), wobei sich der interne Knoten (10) innerhalb eines Bauelementes (1), wie z. B. eines vorgefertigten Betonelementes oder eines Sandwichelementes, befindet und zur drahtlosen Funkkommunikation mit mindestens einem anderen internen Knoten (2; 2a, 2b; 2c, 2d; 10) fähig ist, der sich innerhalb des gleichen oder eines anderen Bauelementes (1) befindet und zur drahtlosen Funkkommunikation fähig ist, wobei mindestens ein interner Knoten (2; 2a, 2b; 2c, 2d; 10) fähig ist, ein Kommunikationssignal zu erzeugen, das sich innerhalb oder außerhalb des Bauelementes (1) empfangen lässt, wobei der mindestens eine Speicher (12) und der Computerprogrammcode (14) mit dem Prozessor (11) konfiguriert sind, um den internen Knoten (2; 2a, 2b; 2c, 2d; 10) zu Folgendem zu veranlassen:
Bestimmen einer Zustandsinformation, wie z. B. einer Feuchtigkeits- und/oder Temperaturinformation, des Bauelementes (1), und zwar basierend auf der Überwachung einer Änderung des Leistungspegels und/oder der Übertragungszeit von mindestens einem Signal, das zwischen den internen Knoten (2; 2a, 2b; 2c, 2d; 10) gesendet wird.

11. Verfahren zum Überwachen (500) des Zustandes eines Bauelementes (1), wie z. B. eines vorgefertigten Betonelementes oder eines Sandwichelementes, **dadurch gekennzeichnet, dass** mindestens zwei interne Knoten (2; 2a, 2b; 2c, 2d; 10) die zur drahtlosen Funkkommunikation fähig sind, sich innerhalb des Bauelementes (1) befinden, wobei das Verfahren Folgendes umfasst:
Bestimmen (502), durch mindestens einen internen Knoten (2; 2a, 2b; 2c, 2d; 10), einer Zustandsinformation, wie z. B. einer Feuchtigkeits- und/oder Temperaturinformation, des Bauelementes, und zwar basierend auf der Überwachung einer Änderung des Leistungspegels und/oder der Übertragungszeit von mindestens einem Signal, das zwischen den internen Knoten (2; 2a, 2b; 2c, 2d; 10) gesendet wird.

12. Verfahren nach Anspruch 11, wobei die Zustandsinformation bestimmt wird (502) auf der Basis eines Leistungspegels des empfangenen Funksignals von mindestens einem internen Knoten (2; 2a, 2b; 2c, 2d; 10) und/oder auf der Basis eines Zeitraums zwischen einem, an einen internen Knoten (2; 2a, 2b; 2c, 2d; 10), gesendeten Funksignal und der Antwort auf das gesendete Funksignal.

13. Verfahren zum Überwachen (600) des Zustandes einer Gebäudestruktur, **gekennzeichnet durch** die Gebäudestruktur, die mindestens ein erstes Bauelement (1), wie ein vorgefertigtes Betonelement oder ein Sandwichelement, und ein zweites Bauelement (1), wie z. B. ein vorgefertigtes Betonelement oder ein Sandwichelement, umfasst;
wobei jedes der ersten und der zweiten Bauelemente (1) Folgendes umfasst (602): mindestens einen internen Knoten (2; 2a, 2b; 2c, 2d; 10), der sich innerhalb des ersten und des zweiten Bauelementes (1) befindet und zur drahtlosen Funkkommunikation fähig ist; wobei das Verfahren Folgendes umfasst:
Bestimmen (604), durch mindestens einen internen Knoten (2; 2a, 2b; 2c, 2d; 10), einer Zustandsinformation, wie z. B. einer Feuchtigkeits- und/oder Temperaturinformation, der Gebäudestruktur, und zwar basierend auf der Überwachung einer Änderung des Leistungspegels und/oder der Übertragungszeit von mindestens einem Signal, das zwischen den internen Knoten (2; 2a, 2b; 2c, 2d; 10) gesendet wird.

14. Verfahren nach Anspruch 13, wobei die Bauelemente (1) sich vernetzen lassen, um eine einzelne gleichmäßige Struktur zu bilden und das Verfahren Folgendes umfasst:
Bilden, durch die internen Knoten (2; 2a, 2b; 2c, 2d; 10) der Bauelemente (1), eines drahtlosen Multi-Hop-Funknetzes für die Kommunikation von Funksignalen zwischen den Bauelementen (1).

15. Verfahren nach einem der Ansprüche 13, wobei mindestens ein interner Knoten (2; 2a, 2b; 2c, 2d; 10) fähig ist, ein Kommunikationssignal zu erzeugen, das sich außerhalb der Gebäudestruktur empfangen lässt und die Zustandsinformation außerhalb der Gebäudestruktur kommuniziert.

## Revendications

1. Elément de construction (1) tel qu'un élément préfabriqué en béton ou un élément en sandwich, **caractérisé par le fait qu'**il comprend au moins deux noeuds internes (2 ; 2a ; 2b ; 2c ; 2d ; 10) disposés à l'intérieur de l'élément de construction (1) et capables de communications radio sans fil ; dans lequel au moins un noeud interne (2 ; 2a ; 2b ; 2c ; 2d ; 10) est configuré pour déterminer des informations de conditions telles que des informations concernant l'humidité et/ou la température de l'élément de construction (1) en se basant sur la surveillance d'un changement concernant le niveau de puissance et/ou le temps de transmission d'au moins un signal envoyé entre les noeuds internes (2 ; 2a ; 2b ; 2c ; 2d ; 10).

2. Structure de construction comprenant au moins deux éléments de construction (1) selon la revendication 1, **caractérisée en ce que**
au moins un noeud interne (2 ; 2a ; 2b ; 2c ; 2d ; 10) d'un desdits au moins deux éléments de construction (1) est configuré pour déterminer des informations de conditions de la structure de construction en se basant sur la surveillance d'un changement concernant le niveau de puissance et/ou le temps de transmission d'au moins un signal envoyé entre un noeud interne (2 ; 2a ; 2b ; 2c ; 2d ; 10) dans un desdits au moins deux éléments de construction (1) et un noeud interne (2 ; 2a ; 2b ; 2c ; 2d ; 10) dans un autre desdits au moins deux éléments de construction (1).

3. Structure de construction selon la revendication 2, dans laquelle lesdits au moins deux éléments de construction (1) peuvent être reliés pour former une structure uniforme unique et les noeuds internes (2 ; 2a ; 2b ; 2c ; 2d ; 10) desdits au moins deux éléments de construction reliés (1) sont capables de former un réseau radio sans fil du type à plusieurs bonds à des fins de communication de signaux radio entre les éléments de construction (1).

4. Élément de construction (1) selon la revendication 1 ou structure de construction selon l'une quelconque des revendications 2 à 3, dans lequel ou dans laquelle au moins un noeud interne (2 ; 2a ; 2b ; 2c ; 2d ; 10) est capable de générer des signaux de communications qui peuvent être reçus à l'extérieur de l'élément de construction (1) et dans lequel ou dans laquelle au moins un noeud interne (2 ; 2a ; 2b ; 2c ; 2d ; 10) est configuré pour générer les informations de conditions qui peuvent être envoyées à l'extérieur de l'élément de construction (1).

5. Élément de construction (1) selon la revendication 4 ou structure de construction selon la revendication 4, dans lequel ou dans laquelle les informations de conditions générées peuvent être envoyées à l'extérieur de l'élément de construction (1) en direction d'un noeud externe (5).

6. Élément de construction (1) selon l'une quelconque des revendications 1, 4 ou 5 ou structure de construction selon l'une quelconque des revendications 2 à 5, dans lequel ou dans laquelle au moins un noeud interne (2 ; 2a ; 2b ; 2c ; 2d ; 10) est configuré pour déterminer les informations de conditions sur base d'un niveau de puissance du signal radio reçu à partir d'au moins un noeud interne (2 ; 2a ; 2b ; 2c ; 2d ; 10) et/ou sur base d'un laps de temps s'écoulant entre un signal radio envoyé en direction d'un noeud interne (2 ; 2a ; 2b ; 2c ; 2d ; 10) et une réponse donnée au signal radio envoyé.

7. Élément de construction (1) selon l'une quelconque des revendications 1, 4 à 6 ou structure de construction selon l'une quelconque des revendications 2 à 6, dans lequel ou dans laquelle au moins une information de condition déterminée peut être stockée dans une mémoire (12) du noeud interne (2 ; 2a ; 2b ; 2c ; 2d ; 10) ou du noeud externe (5).

8. Élément de construction (1) selon l'une quelconque des revendications 1, 4 à 7 ou structure de construction selon l'une quelconque des revendications 2 à 7, dans lequel ou dans laquelle l'élément de construction (1) représente un panneau en sandwich comprenant au moins une surface (3) possédant une faible perméabilité aux ondes radio et au moins une surface (3) possédant une perméabilité élevée aux ondes radio ; et dans lequel ou dans laquelle au moins un noeud interne (2 ; 2a ; 2b ; 2c ; 2d ; 10) est configuré pour communiquer les informations de conditions à un côté du panneau en sandwich comprenant la surface (3) possédant une perméabilité élevée aux ondes radio.

9. Élément de construction (1) selon l'une quelconque des revendications 1, 4 à 8 ou structure de construction selon l'une quelconque des revendications 2 à 8, dans lequel ou dans laquelle l'élément de construction (1) représente un panneau en sandwich comprenant au moins une surface (3) possédant une faible perméabilité aux ondes radio ; dans lequel ou dans laquelle au moins un noeud interne (2 ; 2a ; 2b ; 2c ; 2d ; 10) est configuré pour communiquer les informations de conditions à un côté du panneau en sandwich comprenant la surface (3) possédant une faible perméabilité aux ondes radio ; dans lequel ou dans laquelle la surface (3) possédant une faible perméabilité aux ondes radio comprend au moins un répéteur (6) configuré pour entrer en communication avec au moins un des noeuds internes (2 ; 2a ; 2b ; 2c ; 2d ; 10) et avec l'extérieur du panneau en sandwich.

10. Noeud interne (10) **caractérisé par le fait qu'**il comprend :
au moins un processeur (11) et au moins une mémoire (12) englobant un code de programme informatique (14) ; dans lequel le noeud interne (10) est disposé à l'intérieur d'un élément de construction (1), tel qu'un élément préfabriqué en béton ou un élément en sandwich, et capable de communications radio sans fil avec au moins un autre noeud interne (2 ; 2a ; 2b ; 2c ; 2d ; 10) disposé à l'intérieur du même élément de construction ou d'un élément de construction différent (1) et capable de communications radio sans fil ; dans lequel au moins un noeud interne (2 ; 2a ; 2b ; 2c ; 2d ; 10) est capable de générer un signal de communications qui peut être reçu à l'intérieur ou à l'extérieur de l'élément de construction (1) ; dans lequel ladite au moins une mémoire (12) et le code de programme informatique (14) sont configurés avec le processeur (11) pour faire en sorte que le noeud interne (2 ; 2a ; 2b ; 2c ; 2d ; 10) détermine des informations de conditions, telles que des informations concernant l'humidité et/ou la température de l'élément de construction (1) en se basant sur la surveillance d'un changement concernant le niveau de puissance et/ou le temps de transmission d'au moins un signal envoyé entre les noeuds internes (2 ; 2a ; 2b ; 2c ; 2d ; 10).

11. Procédé pour la surveillance (500) de conditions d'un élément de construction (1) tel qu'un élément préfabriqué en béton ou un élément en sandwich, **caractérisé en ce qu'**au moins deux noeuds internes (2 ; 2a ; 2b ; 2c ; 2d ; 10) capables de communications radio sans fil sont disposés à l'intérieur de l'élément de construction (1), le procédé comprenant le fait de :
déterminer (502), par l'intermédiaire d'au moins un noeud interne (2 ; 2a ; 2b ; 2c ; 2d ; 10), des informations de conditions, telles que des informations concernant l'humidité et/ou la température, de l'élément de construction en se basant sur la surveillance d'un changement concernant le niveau de puissance et/ou le temps de transmission d'au moins un signal envoyé entre les noeuds internes (2 ; 2a ; 2b ; 2c ; 2d ; 10).

12. Procédé selon la revendication 11, dans lequel les informations de conditions sont déterminées (502) sur la base d'un niveau de puissance du signal radio reçu à partir d'au moins un noeud interne (2 ; 2a ; 2b ; 2c ; 2d ; 10) et/ou sur la base d'un laps de temps s'écoulant entre un signal radio envoyé en direction d'un noeud interne (2 ; 2a ; 2b ; 2c ; 2d ; 10) et une réponse donnée au signal radio envoyé.

13. Procédé pour la surveillance (600) de conditions d'une structure de construction, **caractérisé par le fait que** la structure de construction comprend au moins un premier élément de construction (1) tel qu'un élément préfabriqué en béton ou un élément en sandwich, et un second élément de construction (1) tel qu'un élément préfabriqué en béton ou un élément en sandwich ;
dans lequel chaque élément parmi le premier et le second élément de construction (1) comprend (602) au moins un noeud interne (2 ; 2a ; 2b ; 2c ; 2d ; 10) disposé à l'intérieur du premier et du second élément de construction (1) capable de communications radio sans fil ; et le procédé comprend le fait de :
déterminer (604), par l'intermédiaire d'au moins un noeud interne (2 ; 2a ; 2b ; 2c ; 2d ; 10), des informations de conditions, telles que des informations concernant l'humidité et/ou la température, de l'élément de construction en se basant sur la surveillance d'un changement concernant le niveau de puissance et/ou le temps de transmission d'au moins un signal envoyé entre les noeuds internes (2 ; 2a ; 2b ; 2c ; 2d ; 10).

14. Procédé selon la revendication 13, dans lequel les éléments de construction (1) peuvent être reliés pour former une structure uniforme unique, et le procédé comprenant le fait de :
former, par l'intermédiaire des noeuds internes (2 ; 2a ; 2b ; 2c ; 2d ; 10) des éléments de construction (1), un réseau radio sans fil du type à plusieurs bonds à des fins de communication de signaux radio entre les éléments de construction (1).

15. Procédé selon la revendication 13, dans lequel au moins un noeud interne (2 ; 2a ; 2b ; 2c ; 2d ; 10) est capable de générer des signaux de communications qui peuvent être reçus à l'extérieur de la structure de construction et de communiquer les informations de conditions à l'extérieur de la structure de construction.
